# EUROPEAN PATENT SPECIFICATION

(11) **EP 2 006 341 B1**
(45) Date of publication and mention of the grant of the patent: **27.02.2013**
(21) Application number: 07741474.6
(22) Date of filing: 12.04.2007
(51) Int. Cl.: C09J 161/06, C09J 5/02, B32B 15/06, C08J 5/12, C08L 15/02, C08K 3/22

(54) **VULCANIZING ADHESIVE COMPOSITION**
VULKANISIERUNGSHAFTZUSAMMENSETZUNG
COMPOSITION ADHÉSIVE DE VULCANISATION

(30) Priority: 13.04.2006 JP 2006110524
(43) Date of publication of application: 24.12.2008
(73) Proprietor: NOK CORPORATION, Tokyo 105-8585 (JP)
(72) Inventor: ABE, Katsumi, Fujisawa-shi, Kanagawa 251-0042 (JP); SANO, Shinichiro, Fujisawa-shi, Kanagawa 251-0042 (JP); FUKASAWA, Kiyofumi, Fujisawa-shi, Kanagawa 251-0042 (JP)
(74) Representative: HOFFMANN EITLE
(86) International application number: PCT/JP2007/058038
(87) International publication number: WO 2007/119770

(56) References cited:
- WO-A1-99/02583
- JP-A- 05 239 428
- JP-A- 06 073 350
- JP-A- 06 128 541
- JP-A- 11 277 670
- JP-A- 11 511 775
- JP-A- 59 001 546
- JP-A- 2002 332 466
- JP-A- 2004 359 294
- JP-A- 2005 226 064

## Description

### TECHNICAL FIELD

The present invention relates to a vulcanizable adhesive composition, and more particularly to a vulcanizable adhesive composition for suitable use in vulcanization bonding of a metal and an acrylic rubber, etc.

### BACKGROUND ART

In the vulcanization bonding of a metal and an acrylic rubber, processes for coating to surface-treated metals, for example, as surface-treated by a chemical treatment such as zinc phosphate treatment, etc., a blast treatment, or a primer treatment, with a phenol resin-based adhesive are usually used to enhance chemical and physical bonding forces. However, it is difficult to apply such surface treatments to surface roughness-requiring positions. Furthermore, the surface treatment is a prerequisite processwise for the bonding treatment, resulting in an increase in process steps. Thus, it is preferable to bond a metal to an acrylic rubber without application of the surface treatment.
Patent Literature 1 : JP-A-10-121020
Patent Literature 2 : JP-A-11-001672
Patent Literature 3 : JP-A-11-061053
Patent Literature 4 : JP-A-2000-017247

Direct application of so far used ordinary phenol resin-based adhesives to metals without surface treatment, for example, a chemical treatment such as zinc phosphate treatment, etc., a blast treatment, or a primer treatment, still now suffers from such problems as low tight-adhesion to metals and hard attainment of even an initial adhesiveness.
JP 2005 226 064 A relates to a vulcanizing and bonding composition obtained by adding a solvent-dispersible silica and/or a hydrotalcite analogous compound to a phenolic resin and/or an epoxy resin.
The adhesive for use in producing a composite pipe of JP 05 239428 A is prepared by dissolving or dispersing in a solvent 100 parts by weight of acrylonitrile/butadiene copolymer, 60-80 parts by weight of phenol resin, 40-60 parts by weight of bisphenol-derived solid epoxy resin, 50-200 parts by weight of carboxylated chloroprene rubber, 3-25 parts by weight of metal oxide and 20-80 parts by weight of reaction product of a phenol resin derivative with magnesium oxide.

### DISCLOSURE OF THE INVENTION

### PROBLEM TO BE SOLVED BY THE INVENTION

An object of the present invention is to provide a vulcanizable adhesive composition capable of improving the interlayer adhesiveness between an acrylic rubber and a metal without surface treatment, for example, a chemical treatment such as zinc phosphate treatment, a blast treatment, or a primer treatment.

### MEANS FOR SOLVING THE PROBLEM

The object of the present invention can be attained by a vulcanizable adhesive composition, which comprises 45-75% by weight of phenol resin, 5-25% by weight of a specific halogenated polymer as defined in Claim 1, and 10-30% by weight of a metal oxide, on the basis of total solid matters.

### EFFECT OF THE INVENTION

The present vulcanizable adhesive composition can attain a distinguished effect such as an improvement of interlayer adhesiveness between an acrylic rubber and a metal without surface treatment, for example, a chemical treatment such as zinc phosphate treatment, etc., a blast treatment, or a primer treatment.

### BEST MODES FOR CARRYING OUT THE INVENTION

Phenol resin for use in the present invention includes novolak-type phenol resin or resol-type phenol resin, and it is preferable from the viewpoint of assured reactivity with acrylic rubber to use both type phenol resins, and is more preferable to use a blend comprising 50-90% by weight of novolak-type phenol resin and 50-10% by weight of resol-type phenol resin.

Novolak-type phenol resin can be obtained by reaction of phenol with formaldehyd in a molar ratio of 0.1 to 1.0 in the presence of an acidic catalyst such as hydrochloric acid, oxalic acid, etc. Resol-type phenol resin can be obtained by condensation reaction of phenol with formaldehyde in a molar ratio of 1 to 3 in the presence of an alkali catalyst such as ammonia, hydroxides of alkali metal or magnesium, etc. In any case, any of phenols can be used so long as they have two or three substitutable nuclear hydrogen atoms at the o-position, p-position or both o- and p- positions with respect to the phenolic hydroxyl group, for example, phenol, m-cresol, p-cresol, p-t-butylphenol, p-phenylphenol, bisphenol A;

The halogenated polymer for use in the present invention is a polymer of dichlorobutadiene, a polymer of brominated dichlorobutadiene, chlorinated polychloroprene and/or chlorinated rubber.

Metal oxide for use in the present invention includes a titanium oxide, a divalent metal oxide having an acid-accepting effect such as zinc oxide, magnesium oxide, calcium oxide, etc., and a mixture of a titanium oxide and a divalent metal oxide. Preferably a mixture of a titanium oxide and a divalent metal oxide is used.

Among the essential components of above vulcanizable adhesive, the phenol resin is used in a proportion of 45-75% by weight, preferably 55-70% by weight, the halogenated polymer in a proportion of 5-25% by weight, preferably 8-29% by weight, and the metal oxide in a proportion of 10-30% by weight, preferably 13-29% by weight, each on the basis of solid matters. When the halogenated polymer is used in a proportion of more than 25% by weight, the bonding to acrylic rubber will be unsatisfactory, whereas in a proportion less than 5% by weight, the bonding to a metal substrate will be unsatisfactory, giving rise to peeling. This is unpreferable. When the metal oxide is used in a proportion of more than 30% by weight, the stability of the prepared solution will be lowered, and the bonding to acrylic rubber will be also unsatisfactory, whereas in a proportion of less than 10% by weight the bonding to acrylic rubber will be unsatisfactory. This is unpreferable.

The vulcanizable adhesive composition comprising the afore-mentioned essential components can be used as a solution upon dilution with an organic solvent to a concentration of the essential components of 3 to 20% by weight, as total solid matters. The organic solvent is not particularly limited, so long as it can stably dissolve or disperse the phenol resin, halogenated polymer and metal oxide. Generally, alcohols such as methanol, isopropanol, ketones such as methyl ethyl ketone, methyl isobutyl ketone, etc., esters such as ethyl acetate, propyl acetate, and ethers such as ethyl cellosolve, 2-ethoxyethanol, 2-butoxyethanol, can be used as an organic solvent.

In preparation of, for example, an acrylic rubber-metal composite, the solution of the adhesive composition is applied to a metal surface to a coat film thickness of 1 to 30 µm by any of a coating methods such as a spray method, a dipping method, a brush coating method, a roll coater method, etc., followed by drying at room temperature or in an warm air atmosphere, and then by baking at 100° to 250°C for 0.1 to 2 hours, thereby forming an adhesive layer. Then, acrylic rubber compounds are bonded to the resulting adhesive layer, and vulcanized under pressure at about 180° to about 230°C for 2 to 20 minutes, thereby forming an acrylic rubber layer in a thickness of 0.5 to 10mm.

Metal for use in the present invention includes mild steel, stainless steel, aluminum, aluminum die cast, etc. in different shapes, depending on the kinds of metal products, such as sheet shapes, bar shapes, etc. In every case, the metal can be used without surface treatment. Acrylic rubber compounds having any of vulcanizable groups such as active chlorine, epoxy group, carboxylic group, etc. as vulcanizable sites can be used as unvulcanized acrylic rubber compounds, for example, in the following formulation :

### (One example of acrylic rubber compound formulation)

| | Parts by weight |
|---|---|
| Active chlorine-containing acrylic rubber | 100 |
| HAF carbon black | 70 |
| Silica powder | 5 |
| Microcrystalline wax (Sunnock, a product of Ouchi-Shinko Chemical Co.,) | 2 |
| Stearic acid | 1 |
| 4,4' -bis(2,2' -dimethylbenzyl) diphenylamine | 2 |
| Sulfur | 0.3 |
| Sodium stearate | 3.5 |

Acrylic rubber having vulcanizable groups includes acrylic rubber copolymers comprising alkyl acrylate having an alkyl group of 1-8 carbon atoms and/or alkoxyalkyl acrylate having an alkoxyalkylene group of 2-8 carbon atoms as the main component, which is copolymerized with about 0.1 to about 10% by weight, preferably about 1 to about 5% by weight, of a vulcanizable group-containing monomer, for example,
(a) Reactive halogen-containing vinyl monomers
   2-chloroethylvinyl ether, vinyl chloroacetate, allyl chloroacetate, reaction products of glycidyl compound such as glycidyl (meth)-acrylate, allylglycidyl ester, etc. with monochloroacetic acid, or the like
(b) Epoxy group-containing vinyl monomers
   the afore-mentioned glycidyl compounds, etc.
(c) Carboxyl group-containing vinyl monomers
   (meth) acrylic acid, maleic acid mono-lower alkyl ester, fumaric acid mono-lower alkyl ester, etc.
(d) Hydroxyl group-containing vinyl monomers
   2-hydroxylethyl acrylate, etc.
(e) Amide group-containing vinyl monomers
(f) Diene-based monomers
A vulcanizing agent can be used in view of kinds of vulcanizable groups.

### EXAMPLES

The present invention will be described in detail below, referring to Examples.

### EXAMPLE 1

| | Parts by weight |
|---|---|
| Novolak-type phenol resin (Resitop PSF-2803, a product of Gun-ei Chemical Co.,) | 60 |
| Resol-type phenol resin (Resitop PL-2208, a product of Gun-ei Chemical Co., solid matter concentration : 63%) | 63.5 |
| | (solid matters 40) |
| Chlorinated rubber (CAS No. 9006-03-5) | 25 |
| Zinc oxide | 20 |
| Titanium oxide | 20 |
| Methyl isobutyl ketone | 1461.5 |

A vulcanizable adhesive composition made from the afore-mentioned components was applied to a defatted, cold-rolled steel sheet to a coat film thickness of 10 µm, dried at room temperature, and baked at 150°C for 15 minutes.

Unvulcanized acrylic rubber compounds of the afore-mentioned formulation example was bonded to the resulting vulcanizable adhesive-coated steel sheet, and vulcanized under pressure at 200°C for 5 minutes. The resulting bonded article was subjected to a 90° peeling test according to JIS-K6256 corresponding to ASTM D429-03 to measure a percent retained rubber area and determine peeled interface sites.

### EXAMPLE 2

In Example 1, the amount of chlorinated rubber was changed to 15 parts by weight, and the amount of methyl isobutyl ketone was changed to 1371.5 parts by weight.

### EXAMPLE 3

In Example 1, the amount of chlorinated rubber was changed to 35 parts by weight, and the amount of methyl isobutyl ketone was changed to 1551.5 parts by weight.

### EXAMPLE 4

In Example 1, the amount of zinc oxide and that of titanium oxide were changed to 10 parts by weight, respectively, and the amount of methyl isobutyl ketone was changed to 1281.5 parts by weight

### EXAMPLE 5

In Example 1, the amounts of zinc oxide and that of titanium oxide were changed to 25 parts by weight, respectively, and the amount of methyl isobutyl ketone was changed to 1551.5 parts by weight

### COMPARATIVE EXAMPLE 1

In Example 1, no chlorinated rubber was used, and the amount of methyl isobutyl ketone was changed to 1236.5 parts by weight.

### COMPARATIVE EXAMPLE 2

In Example 1, neither zinc oxide nor titanium oxide was used, and the amount of methyl isobutyl ketone was changed to 1101.5 parts by weight.

Results obtained in Examples 1-5 and Comparative Example 1-2 and are shown in the following Table. In the determination of peeled interface sites, symbol "-" in the results means that no peeled interface sites were observed between the metal sheet and the adhesive layer and between the adhesive layer and the acrylic rubber layer.

**Table**

| | Example No. | | | | | Comp. Ex. No. | |
|---|---|---|---|---|---|---|---|
| Item | 1 | 2 | 3 | 4 | 5 | 1 | 2 |
| Percent retained area (%) | 100 | 100 | 100 | 100 | 100 | 20 | 70 |
| Peeled interface sites | - | - | - | - | - | Between metal- adhesive | Between adhesive-rubber |

### INDUSTRIAL UTILITY

The present vulcanizable adhesive composition can be effectively used for bonding of a metal to an acrylic rubber by vulcanization without surface treatment of the metal, and thus can be effectively used in the production of composite parts such as oil seals, etc., particularly oil-resistant and heat-resistant oil seals in engine and transmission systems, etc.

## Claims

1. A vulcanizable adhesive composition, which comprises 45-75% by weight of phenol resin, 5-25% by weight of polymers of dichlorobutadiene, polymers of brominated dichlorobutadiene, chlorinated polychloroprene or chlorinated rubber, and 10-30% by weight of a metal oxide, on the basis of total solid matters.

2. A vulcanizable adhesive composition according to Claim 1, wherein the phenol resin is a novolak-type phenol resin, a resol-type phenol resin, or a mixture thereof.

3. A vulcanizable adhesive composition according to Claim 2, wherein the phenol resin is a mixture comprising 50-90% by weight of novolak-type phenol resin and 50-10% by weight of resol-type phenol resin.

4. A vulcanizable adhesive composition according to Claim 1, wherein the metal oxide is a titanium oxide, a divalent metal oxide, or a mixture of a titanium oxide and a divalent metal oxide.

5. A vulcanizable adhesive composition according to Claim 1, for use as an adhesive in the production of a metal/adhesive layer/acrylic rubber composite.

6. An acrylic rubber-metal composite, which comprises a metal and acrylic rubber, as laminated with a vulcanizable adhesive composition according to Claim 1.

7. An acrylic rubber-metal composite according to Claim 6, wherein the metal is a surface-untreated metal.

## Patentansprüche

1. Vulkanisierbare Haftzusammensetzung, die 45 bis 75 Gew.-% eines Phenolharzes, 5 bis 25 Gew.-% an Dichlorbutadienpolymeren, bromierten Dichlorbutadienpolymeren, chloriertem Polychloropren oder chloriertem Kautschuk und 10 bis 30 Gew.-% eines Metalloxids, bezogen auf den Gesamtfeststoffgehalt, umfasst.

2. Vulkanisierbare Haftzusammensetzung gemäß Anspruch 1, wobei das Phenolharz ein Novolak-Typ-Phenolharz, ein Resol-Typ-Phenolharz oder eine Mischung davon ist.

3. Vulkanisierbare Haftzusammensetzung gemäß Anspruch 2, wobei das Phenolharz eine Mischung ist, die 50 bis 90 Gew.-% eines Novolak-Typ-Phenolharzes und 50 bis 10 Gew.-% eines Resol-Typ-Phenolharzes umfasst.

4. Vulkanisierbare Haftzusammensetzung gemäß Anspruch 1, wobei das Metalloxid ein Titanoxid, ein zweiwertiges Metalloxid oder eine Mischung eines Titanoxids und eines zweiwertigen Metalloxids ist.

5. Vulkanisierbare Haftzusammensetzung gemäß Anspruch 1 zur Verwendung als Haftmittel in der Herstellung eines Metall/Haftschicht/Acrylkautschuk-Verbundteils.

6. Acrylkautschuk-Metallverbundteil, das ein Metall und einen Acrylkautschuk umfasst, die mit der vulkanisierbaren Haftzusammensetzung gemäß Anspruch 1 laminiert sind.

7. Acrylkautschuk-Metallverbundteil gemäß Anspruch 6, wobei das Metall ein Oberflächen-unbehandeltes Metall ist.

## Revendications

1. Composition adhésive vulcanisable, qui comprend 45 à 75% en poids de résine phénolique, 5 à 25% en poids de polymères de dichlorobutadiène, de polymères de dichlorobutadiène bromé, de polychloroprène chloré ou de caoutchouc chloré, et 10 à 30% en poids d'un oxyde de métal, sur la base des matières solides totales.

2. Composition adhésive vulcanisable selon la revendication 1, dans laquelle la résine phénolique est une résine phénolique de type Novolaque, une résine phénolique de type résol, ou un mélange de celles-ci.

3. Composition adhésive vulcanisable selon la revendication 2, dans laquelle la résine phénolique est un mélange comprenant 50 à 90% en poids de résine phénolique de type Novolaque et 50 à 10% en poids de résine phénolique de type résol.

4. Composition adhésive vulcanisable selon la revendication 1, dans laquelle l'oxyde de métal est un oxyde de titane, un oxyde de métal divalent, ou un mélange d'un oxyde de titane et d'un oxyde de métal divalent.

5. Composition adhésive vulcanisable selon la revendication 1, destinée à une utilisation comme un adhésif dans la production d'un composite métal/couche adhésive/caoutchouc acrylique.

6. Composite caoutchouc acrylique-métal, qui comprend un métal et un caoutchouc acrylique, comme stratifiés avec une composition adhésive vulcanisable selon la revendication 1.

7. Composite caoutchouc acrylique-métal selon la revendication 6, dans lequel le métal est un métal non traité en surface.
